# EUROPEAN PATENT SPECIFICATION

(11) **EP 2 953 839 B1**
(45) Date of publication and mention of the grant of the patent: **07.12.2016**
(21) Application number: 14708659.9
(22) Date of filing: 31.01.2014
(51) Int. Cl.: B62D 21/00, B62D 33/00, B62D 33/02, B62D 33/03, B62D 33/04

(54) **INDUSTRIAL VEHICLE BODY COMPRISING A BED AND A PLURALITY OF PERIMETRIC SIDE BOARDS AT LEAST ONE OF WHICH IS OPENABLE**
INDUSTRIEFAHRZEUGKAROSSERIE MIT EINEM BETT UND MEHREREN UMLAUFENDEN SEITENBRETTERN, VON DENEN MINDESTENS EINES ZU ÖFFNEN IST
CAROSSERIE DE VÉHICULE INDUSTRIEL COMPRENANT UNE PLATEFORME ET UNE PLURALITÉ DE RIDELLES LATÉRALES PÉRIMÉTRIQUES DONT AU MOINS UNE PEUT ÊTRE OUVERTE

(30) Priority: 07.02.2013 IT VR20130033
(43) Date of publication of application: 16.12.2015
(73) Proprietor: Natali, Gianfranco, 6924 Sorengo (CH)
(72) Inventor: Natali, Gianfranco, 6924 Sorengo (CH)
(74) Representative: Ponchiroli, Simone
(86) International application number: PCT/IB2014/058700
(87) International publication number: WO 2014/122564

(56) References cited:
- EP-A1- 1 547 870
- EP-A1- 1 616 777
- JP-A- 2004 161 236

## Description

### Technical field

This invention relates to an industrial vehicle body comprising a bed and a plurality of perimetric side boards at least one of which is openable, advantageously the rear one.

More particularly, this invention advantageously relates to so-called fixed bodies, that is to say, those in which the bed cannot move relative to the chassis of the vehicle (unlike dump bodies).

### Background art

In this type of body, the rear side board is openable and can be moved between a closed position, in which it extends upwards relative to the bed, and a completely open position, in which it extends downwards relative to the bed. The passage between the two positions is achieved by rotation around hinges mounted at the edge of the side board adjacent to the bed.

However, in many applications, advantageously the side board can also be stopped in an intermediate opening position in which it is positioned substantially horizontally and constitutes a sort of extension of the bed.

In general, the side board is kept in the intermediate opening position by retaining means which can be selectively activated to retain the side board. The retaining means usually act at each of the two secondary sides of the side board (the vertical edges when the side board is in the closed position).

In all of the prior art solutions, the retaining means comprise for each secondary side of the side board, a flexible elongate element (such as a chain or a metal cable) one end of which is fixed to a lateral side board, and the other end of which is equipped with a system for hooking to the openable side board.

In particular, according to a first prior art solution, the hooking system is constituted of a hook fixed to the flexible element which can be hooked to a ring fixed to the side board (or vice versa).

In contrast, according to a second solution, the hooking system may comprise a ring fixed to the flexible element which can be hooked to a hook fixed to the side board (or vice versa). In this case hooking may only be achieved by orienting and moving the ring precisely relative to the hook, similarly to a Jew's harp.

A further prior art solution which also uses a ring fixed to the side board in contrast sees the flexible element fixed to a spring catch which can be hooked to the ring.

In all of the prior art solutions an element similar to that fixed to the openable side board (ring or hook) is also fixed to the adjacent lateral side board to allow the hooking unit to be retained when one does not intend to use the retaining means and therefore one wants to completely open the side board.

However, this prior art technology has several disadvantages.

In particular, except for the solution which uses the spring catch, the other prior art solutions are not able to guarantee maintenance of the coupling when the body is subjected to jolts which cause the retaining means to bounce. Following various jerks which may affect the retaining means, accidental uncoupling is in fact possible.

In turn, the solution which uses the spring catch, although preventing accidental uncoupling, may be dangerous for the operator, who could risk being injured during the hooking and unhooking steps.

All of the prior art solutions also have the disadvantage of being very noisy while travelling (which usually occurs with the side board closed and therefore with the retaining means not under tension) due both to the interaction of the two hooked parts and the chain or the cable tapping on the side boards.

EP 1 547 870 A1 discloses a vehicle side panel storage box assembly which has a mounting structure, a compartment and a side panel door. The mounting structure is fixedly coupled to a pair of lateral cross frames of a vehicle body and the side panel door is pivotally mounted to the mounting structure. The compartment is fixedly coupled to the mounting structure as a modular unit. The side panel door has an exterior surface panel configured and arranged to form an exterior of a vehicle body side panel.

EP 1 616 777 A1 discloses a body for industrial vehicles comprising a base and a plurality of side panels, at least one of which can be opened. The base of the body forms, at least at the panel that can be opened, a guard protecting outwards from the body and which is located under the panel that can be opened when the panel is closed. At least close to the panel that can be opened, the base of the body and the guard consist of the same sheet of material. The guard is also obtained by folding the sheet of material over itself and the thickness of the guard is substantially double the thickness of the base part of the body made from the same sheet of material.

Any and each of the above EP documents could be taken as basis for the preamble featuring of claim 1.

### Disclosure of the invention

In this context the technical purpose which forms the basis of this invention is to provide an industrial vehicle body comprising a bed and a plurality of perimetric side boards at least one of which is openable which overcomes the above-mentioned disadvantages.

In particular, the aim of this invention is to provide an industrial vehicle body comprising a bed and a plurality of perimetric side boards at least one of which is openable, in which the hooking of the retaining means to the openable side board (in the operating configuration) or other part of the body (in the non-operating configuration) cannot fail due to jolts suffered by the body during running, and in which the retaining means are not a danger to the operator during the hooking and unhooking operations.

Furthermore, the technical purpose of this invention is to provide an industrial vehicle body comprising a bed and a plurality of perimetric side boards at least one of which is openable, in which the noisiness of the retaining means is preferably absent or at least significantly reduced compared with the noisiness of those used in prior art bodies.

The technical purpose specified and the aims indicated are substantially achieved by an industrial vehicle body comprising a bed and a plurality of perimetric side boards at least one of which is openable, as described in the appended claims.

### Brief description of the drawings

Further features and the advantages of this invention are more apparent in the detailed description, with reference to the accompanying drawings which illustrate several preferred, non-limiting embodiments of an industrial vehicle body comprising a bed and a plurality of perimetric side boards at least one of which is openable, in which:
Figure 1 is an axonometric view of an industrial vehicle body made in accordance with this invention, with an openable side board retained by retaining means in an intermediate opening position;
Figure 2 shows an enlarged detail of the body of Figure 1;
Figure 3 is a further enlarged view of a first detail of Figure 2;
Figure 4 is a further enlarged view of a second detail of Figure 2;
Figure 5 is an axonometric view of the part of the body visible in Figure 2 with the openable side board in the completely open position and the retaining means unhooked from the openable side board and positioned in a non-operating configuration;
Figure 6 is a further enlarged view of a first detail of Figure 5;
Figure 7 is a further enlarged view of a second detail of Figure 5;
Figure 8 is an axonometric rear/bottom view of a hooking unit of the body of Figure 1;
Figure 9 is a front/top view of the hooking unit of Figure 8;
Figure 10 is a side view of the hooking unit of Figure 8;
Figure 11 is an axonometric rear/bottom view of a second embodiment of a hooking unit made in accordance with this invention;
Figure 12 is a front/top view of the hooking unit of Figure 11;
Figure 13 is a side view of the hooking unit of Figure 11;
Figure 14 is a cross-section of the hooking unit of Figure 10 according to the line XIV - XIV;
Figure 15 is a cross-section of the hooking unit of Figure 13 according to the line XV - XV;
Figure 16 is a vertical section of the openable side board of Figure 2 in the intermediate opening position and the related hooking unit; and Figure 17 is a vertical section of the hooking unit of Figure 6.

### Detailed description of preferred embodiments of the invention

With reference to the accompanying drawings the numeral 1 denotes in its entirety an industrial vehicle body made in accordance with this invention.

Similarly to prior art bodies, the industrial vehicle body 1 which is the subject matter of this invention also comprises a bed 2 and a plurality of perimetric side boards at least one of which is openable.

In more detail, in the embodiment illustrated in the accompanying drawings, the body 1 is a fixed body and amongst the perimetric side boards there are two lateral side boards 3, one raised front side board 4 which acts as a cab guard, and one rear side board 5.

Moreover, in the embodiment illustrated, both the lateral side boards 3 and the rear side board 5 are openable side boards. However, in the case illustrated, this invention is applied only to the rear side board 5, although in general it may be applied to any openable side board. Hereinafter, the term openable side board 6 will refer to both the rear side board 5 alone with reference to the embodiment illustrated in the accompanying drawings, and to any side board effectively openable in a more general context of application of this invention.

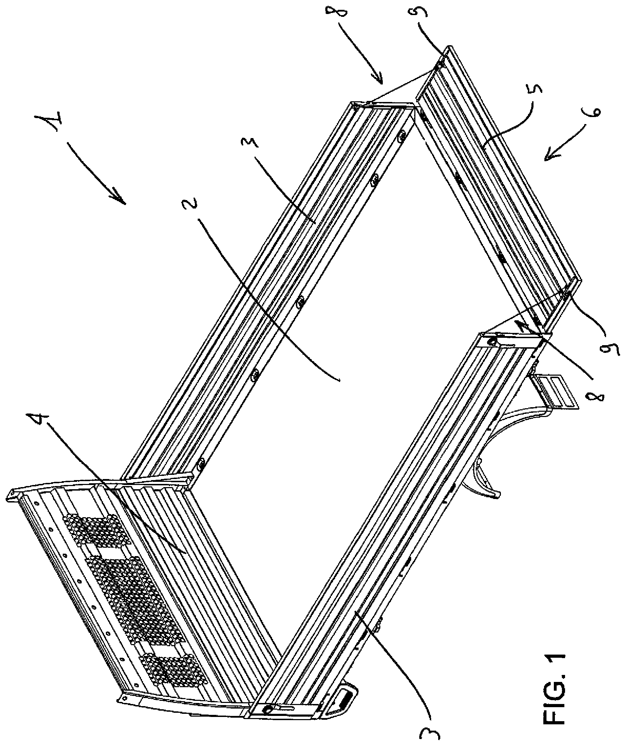

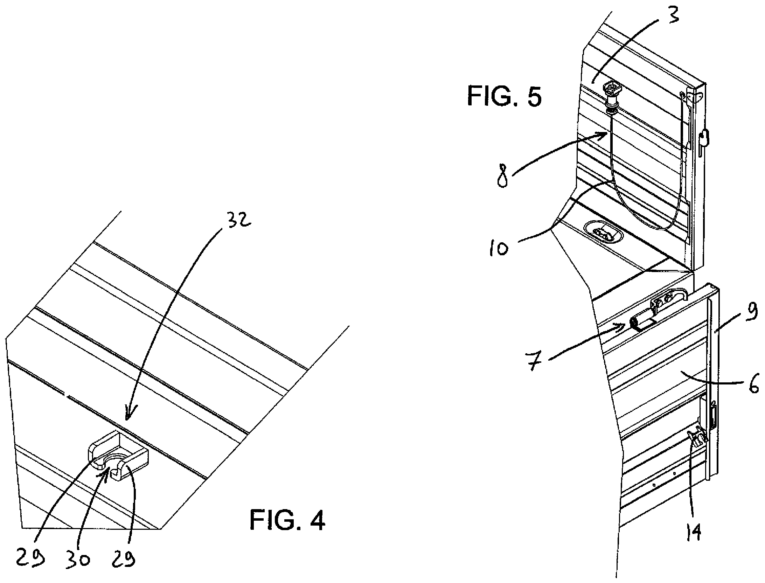

In general, the openable side board 6 is movable at least between a closed position and a completely open position. When it is in the closed position the side board is positioned substantially vertically and extends upwards relative to the bed 2 (position like that of the lateral side boards in Figure 1), whist when it is in the completely open position it is again substantially vertical but extends substantially downwards relative to the bed 2 (Figure 5). The movement of the openable side board 6 between the two positions is achieved by rotation by means of hinges 7 mounted between the bed 2 and the main edge of the side board adjacent to the bed 2. It should be noticed that using hinges 7 it is also possible that the openable side board 6 can be rotated beyond what in this description is identified as the completely open position. Moreover, the context of this invention also covers embodiments in which in the completely open position the side board is angled relative to the vertical plane.

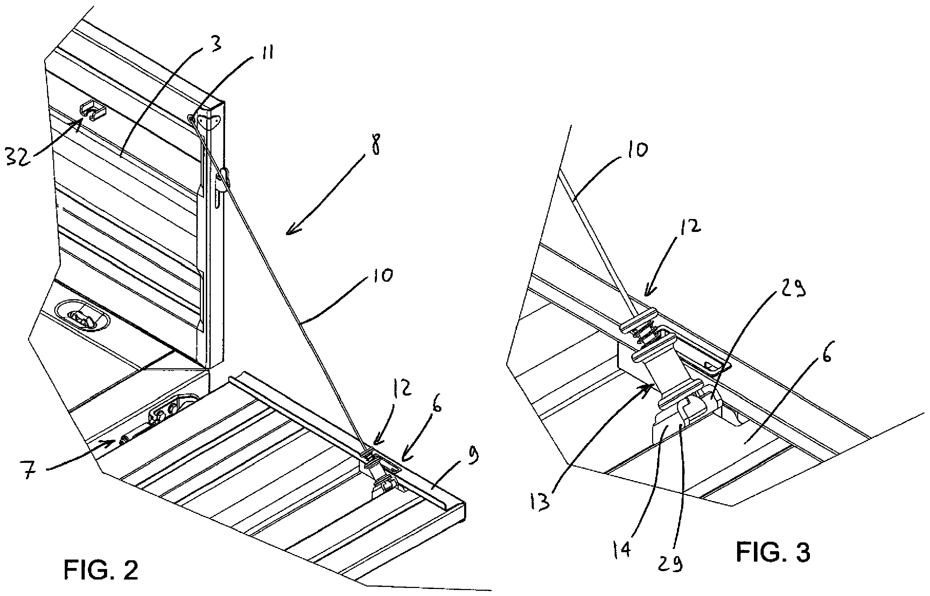

The body 1 also comprises retaining means 8 for retaining the openable side board 6 in an intermediate opening position in which it is positioned substantially horizontally (Figures 1 and 2).

It should be noticed that in the preferred embodiment illustrated, the retaining means 8 are applied in a substantially specular way at both secondary edges 9 of the openable side board 6 (the edges in contact with the lateral side boards 3). However, hereinafter there is a description of the retaining means 8 at only one secondary edge 9, a solution corresponding to the simplest embodiment of this invention. However, what is described also applies to any retaining means 8 positioned at the other secondary edge 9 of the openable side board 6.

Similarly to prior art retaining means 8, those which are the subject matter of this invention also comprise at least one elongate element 10 having a first end 11 and a second end 12.

In the preferred embodiment the elongate element 10 is flexible and, even more preferably, it consists of at least one metal cable.

The retaining means 8 also comprise a hooking unit 13 associated with the second end 12 of the elongate element 10 and at least a fixed first contact element 14. The hooking unit 13 is removably fixable to the fixed first contact element 14 for selectively allowing the openable side board 6 to be retained in the intermediate opening position if hooked to it, or for leaving the openable side board 6 free to reach the completely open position if not hooked to it. Moreover, in general, the fixed first contact element 14 and the first end 11 of the elongate element 10 are fixed one to the openable side board 6 and one to a different side board of the body 1 or to another part of the body 1 which is located close to the openable side board 6. However, in the preferred embodiments, the fixed first contact element 14 is fixed to the openable side board 6, whilst the first end 11 is fixed either to a different side board of the body 1 (as in the embodiments illustrated in which it is fixed to a lateral side board 3) or, if necessary, to another part of the body 1 which is located close to the openable side board 6. Therefore, hereinafter reference is mainly made to these embodiments.

According to the innovative aspect of this invention, the hooking unit 13 comprises a first part 15 and a second part 16 which are movable relative to one another and are designed to clamp the fixed first contact element 14 between them. Advantageously, in particular, the first part 15 and the second part 16 are designed to clamp the fixed first contact element 14 between them without any play.

At least one out of the first part 15 and the second part 16 of the hooking unit 13 is movable relative to the other between a distanced position in which the fixed first contact element 14 can be inserted between the two, and a near position in which insertion of the fixed first contact element 14 between the two is inhibited. Moreover, when the first part 15 and the second part 16 are in an intermediate position they can, in use, clamp the fixed first contact element 14 between them, preferably without any play. The hooking unit 13 also comprises elastic means acting on the first part 15 and/or the second part 16 (the movable part or parts) for pushing them towards the near position in the absence of external stresses.

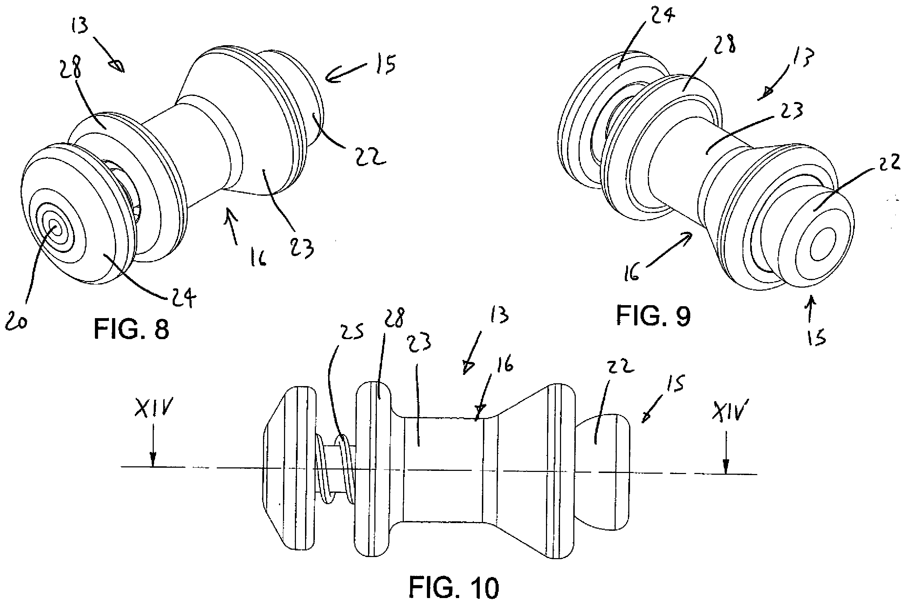

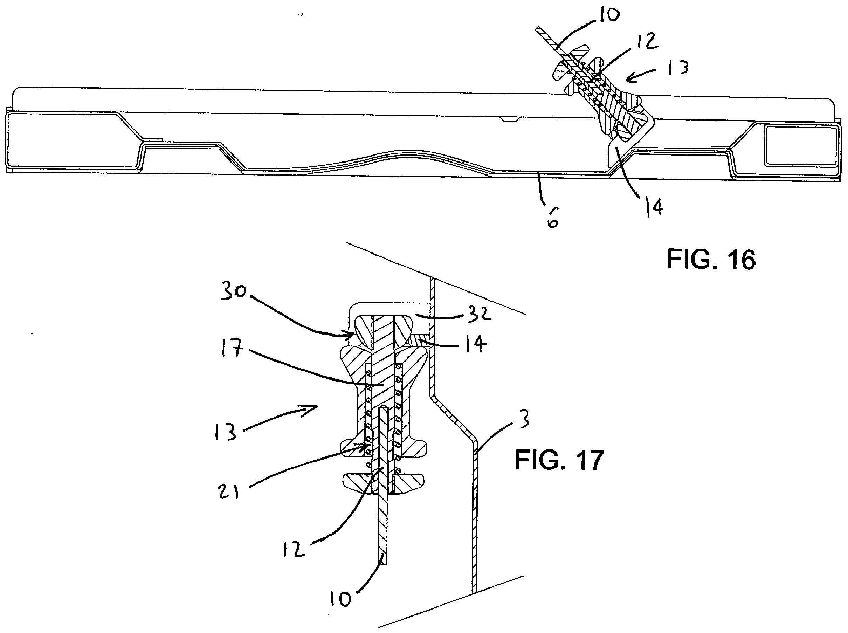

In the preferred embodiments illustrated in Figures 8 to 17, the hooking unit 13 comprises an elongate rod 17 having a first end 18 fixed to the elongate element 10 and a second end 19 to which the first part 15 is connected. In particular, fixing of the first end 18 to the elongate element 10 is achieved by making a hole, preferably a blind hole, 20 in the rod 17, inserting the second end 12 of the flexible elongate element 10 in it and pressing the rod 17 from the outside, in a pressing zone 21 (Figure 17) for irremovably constraining them. However, obviously other fixing methods may be used.

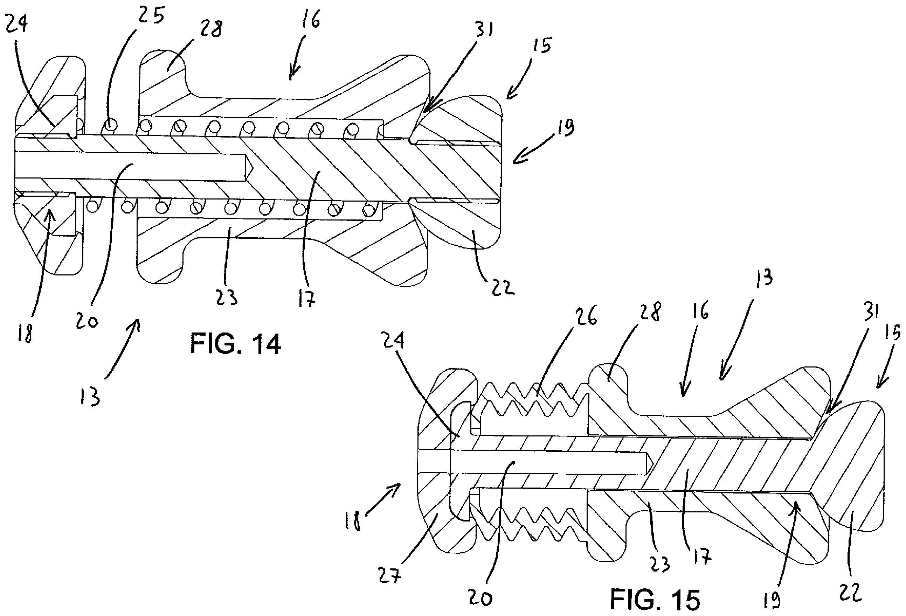

In the preferred embodiment the first part 15 comprises an enlarged head 22 compared with the rod 17, whilst the second part 16 comprises a bushing element 23 slidably mounted on the rod 17 and movable along it away from and towards the enlarged head 22. The elastic means are in turn mounted between the rod 17 and the bushing element 23 for pushing it towards the enlarged head 22. Advantageously, in particular, the rod 17 comprises a stop element 24 positioned close to its first end 18, and the elastic means act in contact against the stop element 24. As shown in Figures 14 and 15 the stop element 24 is preferably an enlarged element. In particular, in a first preferred embodiment (Figures 8 to 10 and 14) the elastic means comprise at least a spiral spring 25 mounted coaxially relative to the rod 17 and partly inserted in the bushing element 23, between the bushing element 23 and the rod 17.

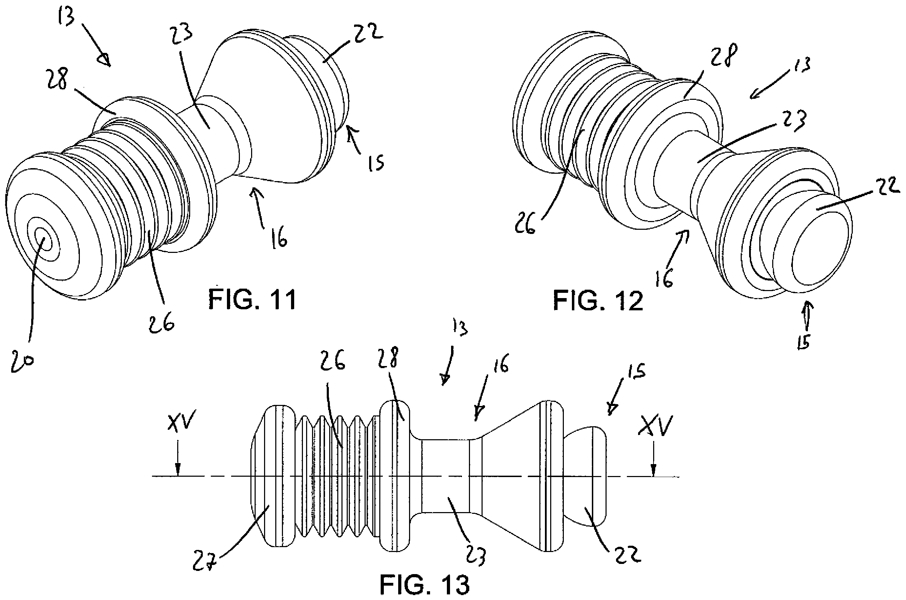

In a second preferred embodiment (Figures 11 to 13 and 15), in contrast the spring is an accordion spring 26 also mounted coaxially relative to the rod 17, but positioned alongside the bushing element. Moreover, in this latter case the accordion spring 26 is advantageously made of an elastically deformable material. Even more preferably, the accordion spring 26 and the second part 16 of the hooking unit 13 (the bushing element 23) are made in one piece using elastically deformable material. In the first embodiment illustrated, both the enlarged head 22 and the stop element 24 are separate pieces relative to the rod 17, being fixed to the latter by screwing. However, in general, in order to be able to proceed with assembly of the hooking unit 13 it would be sufficient to make only one of them removable, with the possibility of making the other in one piece with the rod 17.

In contrast, in the second embodiment illustrated, both the enlarged head 22 and the stop element 24 are in one piece with the rod 17. That is made possible by the fact that both the bushing element 23 and the accordion spring 26 are made of elastically deformable material. Their mounting on the rod 17 may, in fact, occur by fitting them by forcing on the stop element 24. Moreover, as shown in Figure 15, to guarantee the coupling between the accordion spring 26 and the stop element 24, the stop element 24 may subsequently be covered with a jacket 27, advantageously also made of elastically deformable material, which increases its dimensions and holds the accordion spring 26 in position.

However, in other embodiments, even with this type of accordion spring 26 it is possible to use an enlarged head 22 and/or a stop element 24 which are screwed onto the rod 17.

Preferably, to facilitate operation of the hooking unit 13, the bushing element 23, on the opposite side to that facing towards the enlarged head 22, comprises at least one operating protuberance 28 on which, in use, the fingers of a user can act. In fact, in a very natural way, similar to the way in which one uses a syringe, the user can act on the protuberance 28 with the index finder and middle finger placed on the two sides of the rod 17, and on the stop element 24 with the thumb for compressing the elastic means and bringing the second part 16 into the distanced position.

The first contact element 14 is advantageously fork-shaped, having two opposite arms 29 between which it is possible to insert the rod 17 of the hooking unit 13 positioned substantially orthogonally to the main direction of extension of the arms 29. The two arms 29 are closer at their outer free tips, whilst on the inside them form a seat 30 for housing the first part 15 of the hooking unit 13. In the embodiment illustrated the fixed first contact element 14 is a single sheet forming both the arms 29 and the seat 30 and which is bent through 90° at the outer side of the arms 29 to stiffen them.

Advantageously, the enlarged head 22 has a substantially spheroidal shape, on the side of it facing towards the bushing element 23 which surrounds the area of it for connection to the rod 17. In turn, the seat 30 of the first contact element 14 is substantially shaped to match said substantially spheroidal shape. In the embodiments illustrated, in particular, that is achieved in the thickness of the sheet which constitutes the fixed first contact element 14. Thanks to the fact that they are shaped to match one another, when the two are coupled, some rotation of the hooking unit is allowed relative to the first contact element 14 in the event of stresses acting transversally to the direction of extension of the rod 17 and which are sufficient to overcome the action of the elastic means (stresses which in the embodiment illustrated may be produced, for example, if the lateral side boards 3 are accidentally opened when the rear side board 5 is already open with the retaining means in the operating configuration).

Furthermore, in the preferred embodiments, on its side facing towards the enlarged head 22, the bushing element 23 comprises a flare 31 around the rod 17. The flare 31 is sized in such a way that in the near position the enlarged head 22 can be partly inserted in it. That solution guarantees better clamping both because it widens the contact zone between the bushing element 23 and the fixed first contact element 14, and because it lengthens the compression working stroke of the elastic means. In an embodiment not illustrated the fixed first contact element 14 is shaped to match the flare 31, in such a way that in the hooked configuration it can be partly inserted in the flare 31. Finally, in the preferred embodiment, for each elongate element 10 present, the retaining means 8 also comprise a second fixed contact element 32 which depending on the embodiments is fixed either to a side board of the body 1 different to the openable side board or to another part of the body 1 which is located close to the openable side board 6 if the fixed first contact element 14 is fixed to the openable side board 6, or to the openable side board 6 if the fixed first contact element 14 is fixed either to a side board of the body 1 different to the openable side board or to another part of the body 1 which is located close to the openable side board 6. Said fixed second contact element 32 houses the hooking unit 13 when the openable side board 6 must be kept free to reach the completely open position. Therefore, the hooking unit 13 can be hooked to the fixed second contact element when the retaining means 8 are not acting on the openable side board 6 to retain it in the intermediate opening position.

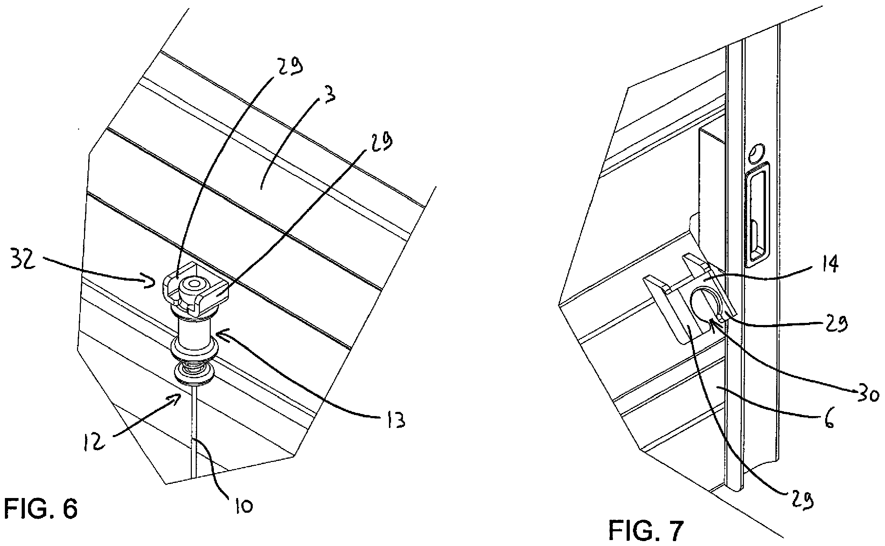

As shown in Figures 3 and 6, in the embodiment illustrated the fixed first contact element 14 and the fixed second contact element 32, aside from small details, only substantially differ in the position in which they are fixed to the side board. Whilst the fixed second contact element 32 is fixed in such a way that the two arms 29 extend substantially horizontally (Figure 6), the fixed first contact element 14 is fixed in such a way that the two arms 29 extend, when the openable side board 6 is in the intermediate opening position, in a plane substantially perpendicular to the direction connecting the fixed first contact element 14 to the point for fixing the first end 11 of the elongate element 10 to the body 1 (that is to say, the direction of traction of the elongate element 10).

Operation of this invention derives immediately from what is described above.

However, in particular, to hook the hooking unit 13 to the openable side board 6, the user presses the bushing element 23 towards the stop element 24 in such a way as to bring the second part 16 into the distanced position. Keeping the second part 16 in that position, the user then inserts the rod 17 between the two arms 29 until it is at the seat 30 and then releases the bushing element 23 which driven by the action of the spring clamps the fixed first contact element 14 without play, causing insertion of the enlarged head 22 in the seat 30.

Unhooking is performed in a similar way, by bringing the bushing element 23 into the distanced position and removing the rod 17 from the fixed first contact element 14.

Connection to and unhooking from the fixed second contact element 32 are performed in an identical fashion.

This invention brings important advantages.

First, the solution according to this invention can guarantee that the coupling is maintained even when the body is subjected to jolts, since the hooking unit of the retaining means moves together with the openable side board.

Second, it is a solution which does not involve any risk for the operator during the hooking and unhooking operation.

Finally, when clamping is achieved without play, there is no noisiness (even more so thanks to the elongate element which is a metal cable which is not subjected to oscillations like a chain).

Finally, it should be noticed that this invention is relatively easy to produce and that even the cost linked to implementing the invention is not very high.

## Claims

1. An industrial vehicle body comprising a bed (2) and a plurality of perimetric side boards at least one of which is openable, the openable side board (6) being movable at least between a closed position in which it is positioned substantially vertically and extends upwards relative to the bed (2), and a completely open position in which it extends substantially downwards relative to the bed (2), the body (1) also comprising retaining means (8) for retaining the opening side board (6) in an intermediate opening position in which it is positioned substantially horizontally, the retaining means (8) in turn comprising at least one elongate element (10) having a first end (11) and a second end (12);
**characterised:**
**in that** the retaining means (8) comprise a hooking unit (13) associated with the second end (12) of the elongate element (10) and at least a fixed first contact element (14), the hooking unit (13) being removably fixable to the fixed first contact element (14) for selectively allowing the openable side board (6) to be retained in the intermediate opening position;
**in that** the fixed first contact element (14) and the first end (11) of the elongate element (10) are fixed one to the openable side board (6) and one to a different side board of the body (1) or to another part of the body (1) which is located close to the openable side board (6);
**in that** the hooking unit (13) comprises a first part (15) and a second part (16) which are movable relative to one another between a distanced position in which the fixed first contact element (14) can be inserted between the two, and a near position in which insertion of the fixed first contact element (14) between the two is inhibited, the first part (15) and the second part (16) in an intermediate position also, in use, being able to clamp between them the fixed first contact element (14);
and **in that** the hooking unit (13) also comprises elastic means acting on the first part (15) and/or the second part (16) for pushing them towards the near position in the absence of external stresses.

2. The body according to claim 1, wherein when the hooking unit (13) is hooked to the fixed first contact element (14) with the first part (15) and the second part (16) in the respective intermediate position, the hooking is free of play and the fixed first contact element (14) is clamped between the first part (15) and the second part (16).

3. The body according to claim 1 or 2, wherein:
the hooking unit (13) comprises an elongate rod (17) having a first end (18) fixed to the elongate element (10) and a second end (19) to which the first part (15) is connected, the first part in turn comprising an enlarged head (22) compared with the rod (17); and
the second part (16) comprises a bushing element (23) slidably mounted on the rod (17) and movable along it; and
the elastic means are mounted between the rod (17) and the bushing element (23) for pushing it towards the enlarged head (22).

4. The body according to claim 3, **characterised in that** the elastic means comprise at least a spiral spring (25) or an accordion spring (26), mounted coaxially relative to the rod (17).

5. The body according to claim 3, **characterised in that** the elastic means comprise an accordion spring (26) and **in that** the second part (16) of the hooking unit (13) and the spring are made in one piece using elastically deformable material.

6. The body according to any of the claims from 3 to 5, wherein the rod (17) comprises a stop element (24) positioned close to the first end (18), the elastic means acting in contact against the stop element (24).

7. The body according to any of the claims from 3 to 6, **characterised in that** the enlarged head (22) has, on the side facing towards the bushing element (23) and around a zone for connection to the rod (17), a substantially spheroidal shape, and **in that** the first contact element (14) comprises a seat (30) which is substantially shaped to match that spheroidal shape, for allowing, when they are coupled together, a certain rotation of the hooking unit relative to the first contact element (14) in the event of stresses which are transversal to the direction of extension of the rod (17) and sufficient to overcome the action of the elastic means.

8. The body according to any of the claims from 3 to 7, **characterised in that** the first contact element (14) is fork-shaped, comprising two opposite arms (29) between which it is possible to insert the rod (17) of the hooking unit (13) positioned substantially orthogonally to the main direction of extension of the arms (29).

9. The body according to any of the claims from 3 to 8, **characterised in that** the bushing element (23) comprises a flare (31) around the rod (17) on the side facing towards the enlarged head (22), and **in that** in the near position the enlarged head (22) is at least partly inserted in the flare (31).

10. The body according to any of the claims from 3 to 9, **characterised in that** the bushing element (23) on the opposite side to that facing towards the enlarged head (22) comprises at least one operating protuberance (28) on which, in use, the fingers of a user can act.

11. The body according to any of the preceding claims, **characterised in that** the elongate element (10) consists of at least one metal cable.

12. The body according to any of the preceding claims, **characterised in that** it comprises a fixed second contact element (32) which is fixed respectively either to the openable side board (6) or to a different side board of the body (1) or to another part of the body (1) which is located close to the openable side board (6), to which the hooking unit (13) can be hooked when the retaining means (8) are not acting on the openable side board (6) to retain it in the intermediate opening position.

## Patentansprüche

1. Industriefahrzeugkastenaufbau, enthaltend eine Ladefläche (2) und eine Anzahl von umlaufenden Seitenwänden, von denen wenigstens eine zu öffnen ist, wobei die zu öffnende Seitenwand (6) beweglich ist zwischen wenigstens einer geschlossenen Position, in welcher sie im wesentlichen vertikal angeordnet ist und sich im Verhältnis zu der Ladefläche (2) nach oben erstreckt, und einer vollkommen offenen Position, in welcher sie sich im Verhältnis zu der Ladefläche (2) im wesentlichen nach unten erstreckt, wobei der Kastenaufbau ebenfalls Haltemittel (8) zum Halten der geöffneten Seitenwand (6) in einer offenen Zwischenposition enthält, in welcher sie im wesentlichen horizontal angeordnet ist, und wobei die Haltemittel (8) wiederum wenigstens ein verlängertes Element (10) enthalten, das ein erstes Ende (11) und ein zweites Ende (12) aufweist;
**dadurch gekennzeichnet,**
**dass** die Haltemittel (8) eine Einhakvorrichtung (13) enthalten, zugeordnet dem zweiten Ende (12) des verlängerten Elementes (10), und wenigstens ein erstes feststehendes Kontaktelement (14), wobei die Einhakvorrichtung (13) lösbar an dem ersten feststehenden Kontaktelement (14) befestigt werden kann, um es der zu öffnenden Seitenwand (6) wahlweise zu erlauben, in der geöffneten Zwischenposition gehalten werden zu können;
**dadurch,** dass das erste feststehende Kontaktelement (14) und das erste Ende (11) des verlängerten Elementes (10) jeweils eins an der zu öffnenden Seitenwand (6) und eins an einer verschiedenen Seitenwand des Kastenaufbaus (1) oder an einem anderen Teil des Kastenaufbaus (1) befestigt sind, welches dicht an der zu öffnenden Seitenwand (6) angeordnet ist;
**dadurch,** dass die Einhakvorrichtung (13) ein erstes Teil (15) und ein zweites Teil (16) enthält, welche zueinander beweglich sind zwischen einer voneinander abstehenden Position, in welcher das erste feststehende Kontaktelement (14) zwischen beiden eingesetzt werden kann, und einer angenäherten Position, in welcher das Einsetzen des ersten feststehenden Kontaktelementes (14) zwischen beiden verhindert wird, wobei das erste Teil (15) und das zweite Teil (16) während des Betriebes in einer Zwischenposition auch in der Lage sind, zwischen sich das erste feststehende Kontaktelement (14) einzuklemmen; **und dadurch,** dass die Einhakvorrichtung (13) ebenfalls elastische Mittel enthält, die auf das erste Teil (15) und/oder das zweite Teil (16) wirken, um diese bei Fehlen von äusseren Belastungen zueinander in die angenäherte Position zu schieben.

2. Kastenaufbau nach Patentanspruch 1, bei welchem die Einhakvorrichtung (13) in das erste feststehende Kontaktelement (14) eingehakt wird, mit dem ersten Teil (15) und dem zweiten Teil (16) in der entsprechenden zwischenliegenden Position, wobei das Einhaken frei von Spiel und das erste feststehende Kontaktelement (14) zwischen dem ersten Teil (15) und dem zweiten Teil (16) festgeklemmt ist.

3. Kastenaufbau nach Patentanspruch 1 oder 2, bei welchem:
die Einhakvorrichtung (13) eine längliche Stange (17) enthält, die ein erstes Ende (18) hat, befestigt an dem verlängeren Element (10), und einzweites Ende (19), an welches das erste Teil (15) angeschlossen ist, wobei das erste Teil im Verhältnis zu der Stange (17) wiederum einen verbreiterten Kopf (22) aufweist; und
das zweite Teil (16) ein Buchsenelement (23) enthält, gleitbar montiert an der Stange (17) und entlang dieser beweglich; und
die elastischen Mittel zwischen der Stange (17) und dem Buchsenelement (23) montiert sind, um dieses in Richtung des verbreiterten Kopfes (22) zu drücken.

4. Kastenaufbau nach Patentanspruch 3, **dadurch gekennzeichnet, dass** die elastischen Mittel wenigstens eine Spiralfeder (25) oder eine Blasebalgfeder (26) enthalten, montiert koaxial im Verhältnis zu der Stange (17).

5. Kastenaufbau nach Patentanspruch 3, **dadurch gekennzeichnet, dass** die elastischen Mittel eine Blasebalgfeder (26) enthalten, und **dadurch,** dass das zweite Teil (16) der Einhakvorrichtung (13) und die Feder unter Verwendung von elastisch verformbarem Material in einem Stück hergestellt sind.

6. Kastenaufbau nach einem jeden der Patentansprüche von 3 bis 5, bei welchem die Stange (17) ein Anschlagelement (24) enthält, positioniert dicht an dem ersten Ende (18), wobei die elastischen Mittel im Kontakt auf das Anschlagelement (24) wirken.

7. Kastenaufbau nach einem jeden der Patentansprüche von 3 bis 6, **dadurch gekennzeichnet, dass** der verbreiterte Kopf (22) auf der dem Buchsenelement (23) zugewandten Seite und um einen Bereich für den Anschluss an die Stange (17) eine im wesentlichen runde Form aufweist, und **dadurch,** dass das erste Kontaktelement (14) einen Sitz (30) enthält, welcher im wesentlichen so geformt ist, dass er sich dieser runden Form anpasst, um, wenn sie miteinander verbunden sind, eine gewisse Drehung der Einhakvorrichtung im Verhältnis zu dem ersten Kontaktelement (14) im Falle von Belastungen zu erlauben, welche quer zu der Ausdehnungsrichtung der Stange (17) verlaufen und ausreichen, die Wirkung der elastischen Mittel zu überwinden.

8. Kastenaufbau nach einem jeden der Patentansprüche von 3 bis 7, **dadurch gekennzeichnet, dass** das erste Kontaktelement (14) gabelförmig ist, enthaltend zwei sich gegenüberliegende Arme (29), zwischen welchen es möglich ist, die Stange (17) der Einhakvorrichtung (13) einzusetzen, positioniert im wesentlichen rechtwinklig zu der Hauptausdehnungsrichtung der Arme (29).

9. Kastenaufbau nach einem jeden der Patentansprüche von 3 bis 8, **dadurch gekennzeichnet, dass** das Buchsenelement (23) rund um die Stange (17) auf der dem verbreiterten Kopf (22) zugewandten Seite eine trichterförmige Abschrägung (31) enthält, und **dadurch,** dass in der angenäherten Position der verbreiterte Kopf (22) wenigstens teilweise in die Abschrägung (31) eingesetzt ist.

10. Kastenaufbau nach einem jeden der Patentansprüche von 3 bis 9, **dadurch gekennzeichnet, dass** das Buchsenelement (23) an der entgegengesetzten Seite von der dem verbreiterten Kopf (22) zugewandten wenigstens einen Bedienungsvorsprung (28) enthält, auf welchen während des Betriebes die Finger eines Benutzers einwirken können.

11. Kastenaufbau nach einem jeden der vorstehenden Patentansprüche, **dadurch gekennzeichnet, dass** das verlängerte Element (10) aus wenigstens einem Metallkabel besteht.

12. Kastenaufbau nach einem jeden der vorstehenden Patentansprüche, **dadurch gekennzeichnet, dass** er ein zweites feststehendes Kontaktelement (32) enthält, welches entweder an der zu öffnenden Seitenwand (6) oder beziehungsweise an einer anderen Seitenwand des Kastenaufbaus (1) oder an einem noch anderen Teil des Kastenaufbaus (1) befestigt wird, welcher sich dicht an der zu öffnenden Seitenwand (6) angeordnet befindet, an welchem die Einhakvorrichtung (13) eingehakt werden kann, wenn die Haltemittel (8) nicht auf die zu öffnende Seitenwand (6) wirken, um diese in der geöffneten Zwischenposition zu halten.

## Revendications

1. Une carrosserie de véhicule industriel comprenant une plateforme (2) et une pluralité de ridelles latérales périmétriques dont au moins une peut être ouverte, la ridelle latérale ouvrable (6) étant mobile au moins entre une position de fermeture dans laquelle elle est positionnée essentiellement à la verticale et s'étend vers le haut par rapport à la plateforme (2), et une position d'ouverture complète dans laquelle elle s'étend essentiellement vers le bas par rapport à la plateforme (2), la carrosserie (1) comprenant aussi des moyens de retenue (8) pour retenir la ridelle latérale ouvrable (6) dans une position d'ouverture intermédiaire dans laquelle elle est positionnée essentiellement à l'horizontale, les moyens de retenue (8) comprenant à leur tour au moins un élément allongé (10) ayant une première extrémité (11) et une deuxième extrémité (12) ;
**caractérisée :**
**en ce que** les moyens de retenue (8) comprennent un organe d'accrochage (13) associé à la deuxième extrémité (12) de l'élément allongé (10) et au moins un premier élément de contact fixe (14), l'organe d'accrochage (13) étant fixé de façon amovible au premier élément de contact fixe (14) pour permettre sélectivement à la ridelle latérale ouvrable (6) d'être retenue dans la position d'ouverture intermédiaire ;
**en ce que** le premier élément de contact fixe (14) et la première extrémité (11) de l'élément allongé (10) sont fixés l'un à la ridelle latérale ouvrable (6) et l'une à une autre ridelle latérale de la carrosserie (1) ou à une autre partie de la carrosserie (1) qui est située à proximité de la ridelle latérale ouvrable (6) ;
**en ce que** l'organe d'accrochage (13) comprend une première partie (15) et une deuxième partie (16) qui sont mobiles l'une par rapport à l'autre entre une position espacée dans laquelle le premier élément de contact fixe (14) peut être inséré entre les deux, et une position rapprochée dans laquelle l'insertion du premier élément de contact fixe (14) entre les deux est inhibée, la première partie (15) et la deuxième partie (16) dans une position intermédiaire pouvant aussi, dans la pratique, serrer entre elles le premier élément de contact fixe (14) ;
et **en ce que** l'organe d'accrochage (13) comprend aussi des moyens élastiques agissant sur la première partie (15) et/ou la deuxième partie (16) pour les pousser vers la position rapprochée en l'absence de sollicitations externes.

2. La carrosserie selon la revendication 1, dans laquelle, quand l'organe d'accrochage (13) est accroché au premier élément de contact fixe (14) avec la première partie (15) et la deuxième partie (16) dans la position intermédiaire respective, l'accrochage est privé de jeu et le premier élément de contact fixe (14) est serré entre la première partie (15) et la deuxième partie (16).

3. La carrosserie selon la revendication 1 ou 2, dans laquelle :
l'organe d'accrochage (13) comprend une tige allongée (17) ayant une première extrémité (18) fixée à l'élément allongé (10) et une deuxième extrémité (19) à laquelle est raccordée la première partie (15), telle première partie comprenant à son tour une tête renflée (22) comparée à la tige (17) ; et
la deuxième partie (16) comprend un élément à douille (23) monté de façon coulissante sur la tige (17) et mobile le long de celle-ci ; et
les moyens élastiques sont montés entre la tige (17) et l'élément à douille (23) pour le pousser vers la tête renflée (22).

4. La carrosserie selon la revendication 3, **caractérisée en ce que** les moyens élastiques comprennent au moins un ressort à spirale (25) ou un ressort à soufflet (26), monté coaxialement par rapport à la tige (17).

5. La carrosserie selon la revendication 3, **caractérisée en ce que** les moyens élastiques comprennent un ressort à soufflet (26) et **en ce que** la deuxième partie (16) de l'organe d'accrochage (13) et le ressort sont réalisés en une seule pièce avec un matériau élastiquement déformable.

6. La carrosserie selon l'une quelconque des revendications de 3 à 5, dans laquelle la tige (17) comprend un élément de butée (24) positionné à proximité de la première extrémité (18), les moyens élastiques agissant en contact contre l'élément de butée (24).

7. La carrosserie selon l'une quelconque des revendications de 3 à 6, **caractérisée en ce que** la tête renflée (22) a, du côté orienté vers l'élément à douille (23) et autour d'une zone de raccord à la tige (17), une forme essentiellement sphéroïdale, et **en ce que** le premier élément de contact (14) comprend un logement (30) qui est essentiellement conformé pour correspondre à cette forme sphéroïdale, pour permettre, quand ils sont accouplés ensemble, une certaine rotation de l'organe d'accrochage par rapport au premier élément de contact (14) dans le cas de sollicitations qui sont transversales à la direction d'extension de la tige (17) et suffisantes pour vaincre l'action des moyens élastiques.

8. La carrosserie selon l'une quelconque des revendications de 3 à 7, **caractérisée en ce que** le premier élément de contact (14) a la forme d'une fourche, comprenant deux bras opposés (29) entre lesquels il est possible d'insérer la tige (17) de l'organe d'accrochage (13) positionnée essentiellement orthogonalement à la direction principale d'extension des bras (29).

9. La carrosserie selon l'une quelconque des revendications de 3 à 8, **caractérisée en ce que** l'élément à douille (23) comprend un évasement (31) autour de la tige (17) du côté orienté vers la tête renflée (22), et **en ce que** dans la position rapprochée la tête renflée (22) est au moins partiellement insérée dans l'évasement (31).

10. La carrosserie selon l'une quelconque des revendications de 3 à 9, **caractérisée en ce que** l'élément à douille (23), du côté opposé à celui qui est orienté vers la tête renflée (22), comprend au moins une protubérance opérationnelle (28) sur laquelle, dans la pratique, peuvent agir les doigts d'un utilisateur.

11. La carrosserie selon l'une quelconque des revendications précédentes, **caractérisée en ce que** l'élément allongé (10) consiste en au moins un câble métallique.

12. La carrosserie selon l'une quelconque des revendications précédentes, **caractérisée en ce qu'**elle comprend un deuxième élément de contact fixe (32) qui est fixé respectivement soit à la ridelle latérale ouvrable (6) soit à une autre ridelle latérale de la carrosserie (1) ou à une autre partie de la carrosserie (1) qui est située à proximité de la ridelle latérale ouvrable (6), auquel l'organe d'accrochage (13) peut être accroché quand les moyens de retenue (8) n'agissent pas sur la ridelle latérale ouvrable (6) pour la retenir dans la position d'ouverture intermédiaire.
